# EUROPEAN PATENT APPLICATION

(11) **EP 1 146 448 A1**
(43) Date of publication of application: **17.10.2001**
(21) Application number: 00303035.0
(22) Date of filing: 11.04.2000
(51) Int. Cl.: G06F 17/60

(54) **Method for tie-up campaign and tie-up campaign card**

(71) Applicant: NexTel Corporation, Shibuya-ku, Tokyo (JP)
(72) Inventor: Kondo, Takami, Shibuya-ku, Tokyo (JP)
(74) Representative: Lamb, Martin John Carstairs

(57) **Abstract**

Method for tie-up-campaign includes process to make an agreement for introducing commission between a planning agency and companies giving a service including portable telephones, broadcasting, internet providers so as to gain an introducing commission in case that the planning agency introduces members subscribes for the service imposed initial charge; process to make an agreement for a tie-up campaign between the planning agency and tied-up shops including restaurants, *Karaoke* shops, stores which enter free into partnership with the campaign waged by the planning agency; process to make cards printed advertisement for campaign that the planning agency supplies a gear which is one of portable telephone, tuner and antenna, personal computer free to the members and advertisement for the tied-up shops; and process to distribute the printed cards for the campaign in such shop which is one of a restaurant, *Karaoke* shop, and a store made the tie-up agreement. Therefore, the planning agency makes a plan for a tie-up campaign, and the tie-up campaign card is distributed without any burden to the tie-up company, shops and the like.

## Description

### BACKGROUND OF THE INVENTION

This invention relates to a method for a tie-up campaign and a tie-up-campaign card.

When a conventional tie-up campaign is run, the campaign company is supplied prizes from the supporting companies for the campaign because they support the campaign and associate each other.

In the conventional tie-up campaign, there are faults in that the cost has heretofore been very high, and the campaign company and tied-up company have to stand the imposed expense each other.

### SUMMARY OF THE INVENTION

For the purpose of overcoming the foregoing disadvantages, it is an object of the present invention to provide improved method for a tie-up campaign and a tie-up-campaign card for the which allow a planning company to make a plan for the tie-up campaign and wage the tie-up campaign without their burden to tied-up companies, shops, stores and the like. It is another object of the present invention to provide improved method for a tie-up campaign and a tie-up-campaign card which allow tie-up campaign card to distribute without any burden to the tied-up companies, shops stores and the like.

Other objects and novel features of the present invention will be apparent from reading of the detailed description in conjunction with the drawings.

The accompanied are provided for illustrative purposes, and are not meant to limit the scope of the present invention.

### BRIEF DESCRIPTION OF THE DRAWINGS

FIG. 1 is a flow diagram showing a first embodiment of the present invention;
FIG. 2 is a plan of one side of a card used for a tie-up campaign;
FIG. 3 is a plan view of the other side of card used for a tie-up campaign shown in FIG. 2;
FIG. 4 is a flow diagram showing a second embodiment of the present invention;
FIG. 5 is a plan of one side of a card used for a tie-up campaign;
FIG. 6 is a plan view of the other side of a card used for a tie-up campaign shown in FIG. 5;
FIG. 7 is a flow diagram showing a third embodiment of the present invention;
FIG. 8 is a plan of one side of a card used for a tie-up campaign;
FIG. 9 is a plan view of the other side of card used for a tie-up campaign shown in FIG. 8;
FIG. 10 is a flow diagram showing a fourth embodiment of the present invention;
FIG. 11 is a plan of one side of a card used for a tie-up campaign; and
FIG. 12 is a plan view of the other side of card used for a tie-up campaign shown in FIG. 11.

### DESCRIPTION OF THE REFERRED EMBODIMENT

Preferred embodiments of the present invention are described in more detail below referring to the accompanying drawings.

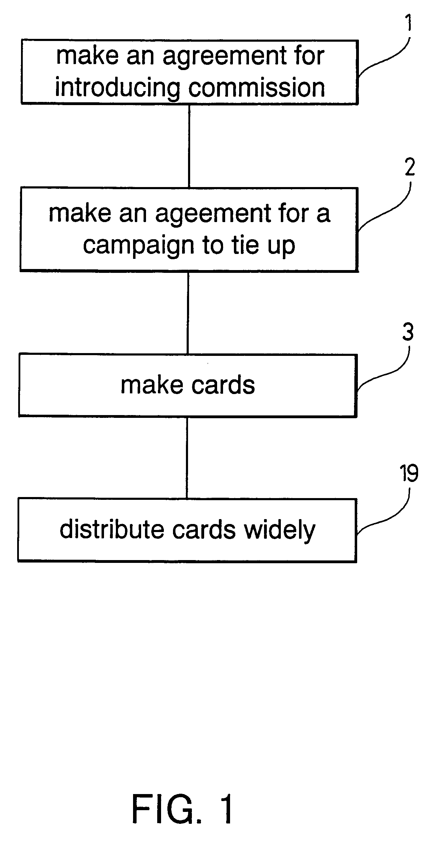

An understanding of the present invention may be best gained by reference FIGS. 1 to 3. FIGS. 1 to 3 illustrate the first embodiment of the present invention.

The numeral 1 shows a process to make an agreement for introducing commission.

A planning agency introduces members subscribe for services imposed initial charge such as portable telephones, broadcastings, internet providers and the like to the companies giving such services. In view of this fact, each of aforesaid companies makes an agreement with the planning agency so as to be gained with the introducing commission. This agreement made in this process 1 is made as done before.

The numeral 2 is a process to make an agreement for a tie-up campaign. In this process, the planning agency makes a tie-up campaign agreement with the shops such as restaurants, *Karaoke* shops (the word "Karaoke" means the songs without vocals for the sake of the singing at the place where band cannot be prepared such as small halls, bars, and the like), stores and the like, which enter free into partnership with the campaign waged by the planning agency according to the process 1. This agreement made in this process 2 is made as done before.

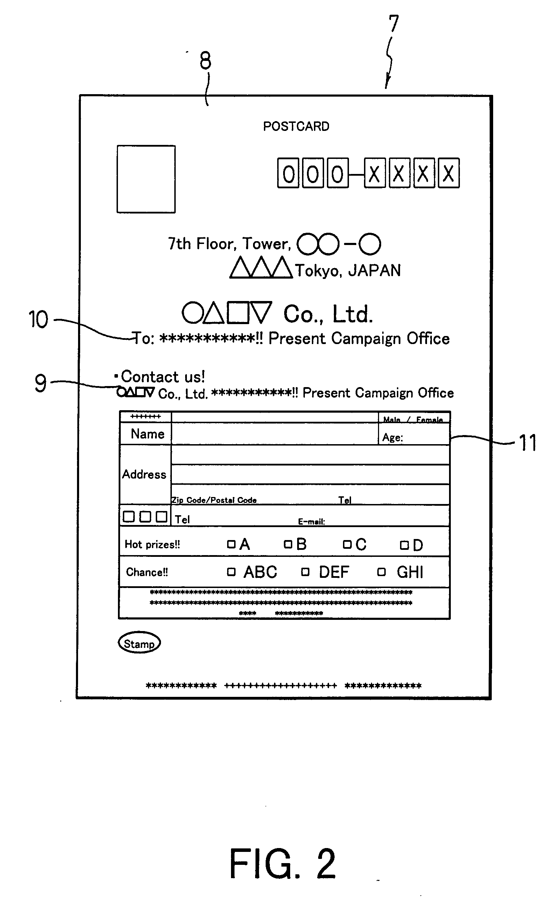

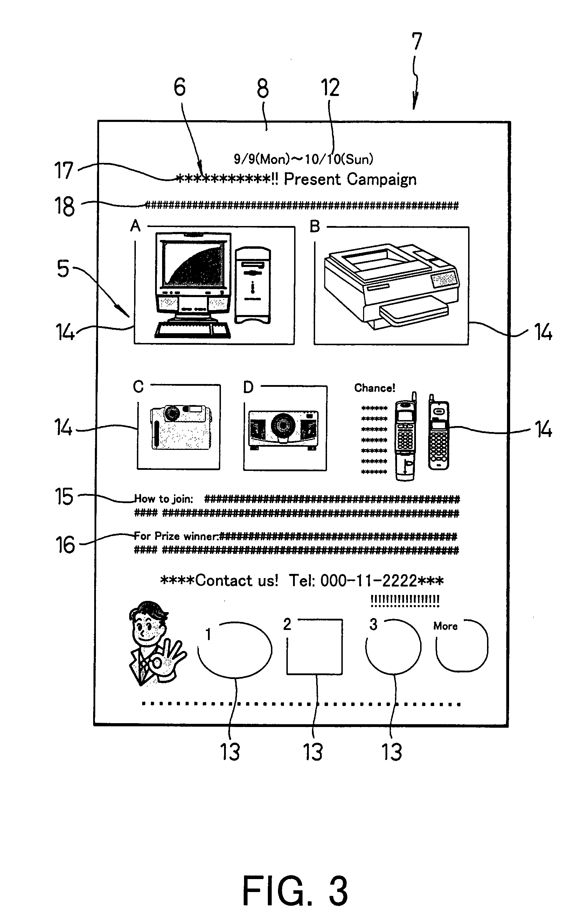

The numeral 3 is a process to make cards for the tie-up campaign. In this process, the tie-up-campaign card 7 is printed a campaign advertisement (ad) 5 and a shop advertisement (ad) 6. The campaign ad 5 is directed to prizes which are supplied free the portable telephone, tuner and antenna, personal computer or the like to the member and supplied them by lottery to the member according to the process 1. The shop ad 6 is directed to the shops such as restaurants, *Karaoke* shops, stores or the like respectively according to the process 2. As shown in FIGS. 2 and 3, the tie-up-campaign card 7 produced in this process 3 further includes a card body 8 defining a postcard, postal card and like, reference 9, name of the campaign 10, member identification section 11, and the campaign advertisement 5 and shop advertisement 6. The reference 9 is printed at one side of the card body 8 and represents a business reply mail return address designation. With respect to the subscriber, the information identification side of an information request postcard has the subscriber identification section or portion 11 which is provided to be filled out by the subscriber. The information includes the name, address, reference during the day, e-mail address, etc. of the member to which the prize is to be sent (i.e. by mail). The campaign ad 5 and shop ad 6 are printed at the other side of the card body 8. The campaign ad 5 is directed to the prize supplied free by the shops. In this card body 8, it may be printed a franking designation, stamp-receiving area, indicia ( not numbered) thereto.

Additionally, the campaign ad 5 includes a period run the campaign 12, information 13 for the freely supplied prize, information 14 for the supplied prize by lottery, how to join 15, information for prize winner 16, etc. The shop ad 6 includes the name 17 of the tied-up shops, information 18 for the campaign of the shops as occasion demands.

The numeral 19 is a process to distribute the campaign cards produced in the process 3 into the shops such as restaurant, *Karaoke* shop, store or the like made the campaign agreement. In this process 19, the card is handed to the customer comes to the shop, or the card is put on the counter or table so as to bring it back at will.

In the above mentioned process for the campaign, the shops such as restaurant, *Karaoke* shop, store make the campaign agreement only so that the shops can do the campaign without making the campaign cards.

### DIFFERENT REFERRED EMBODIMENT OF THE INVENTION

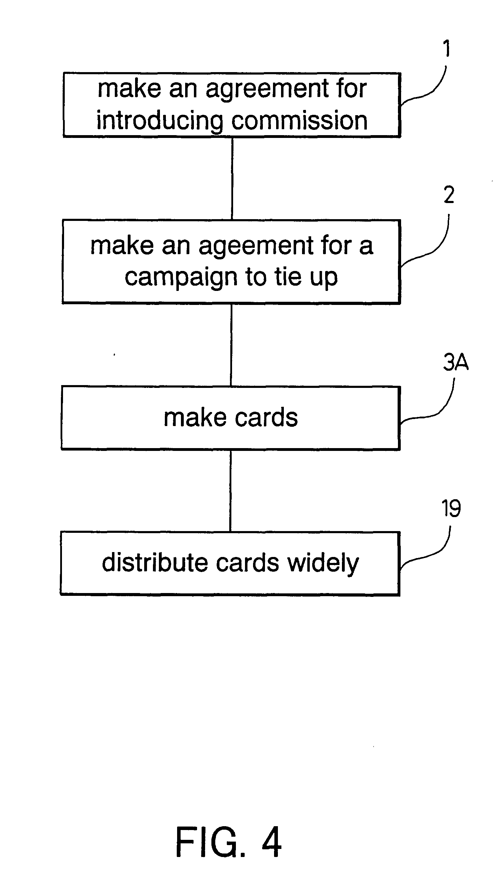

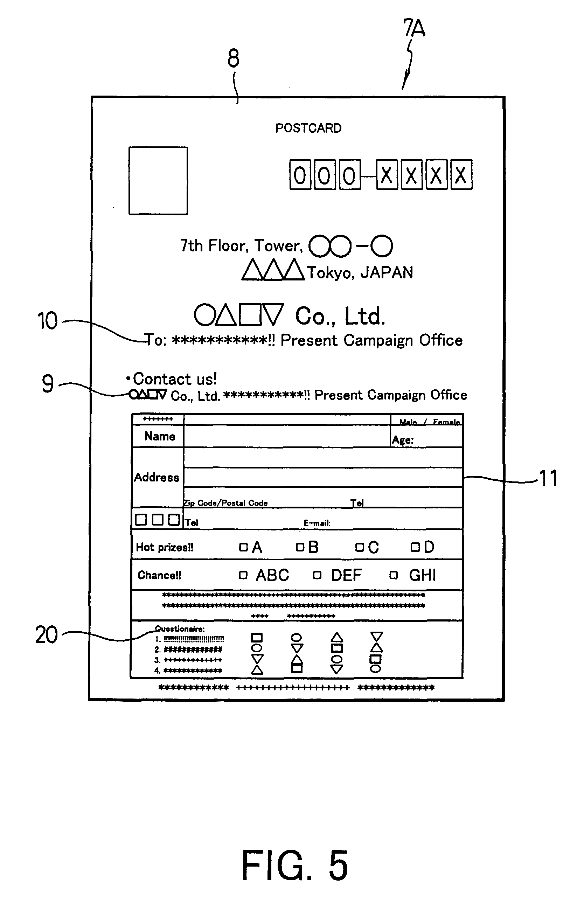

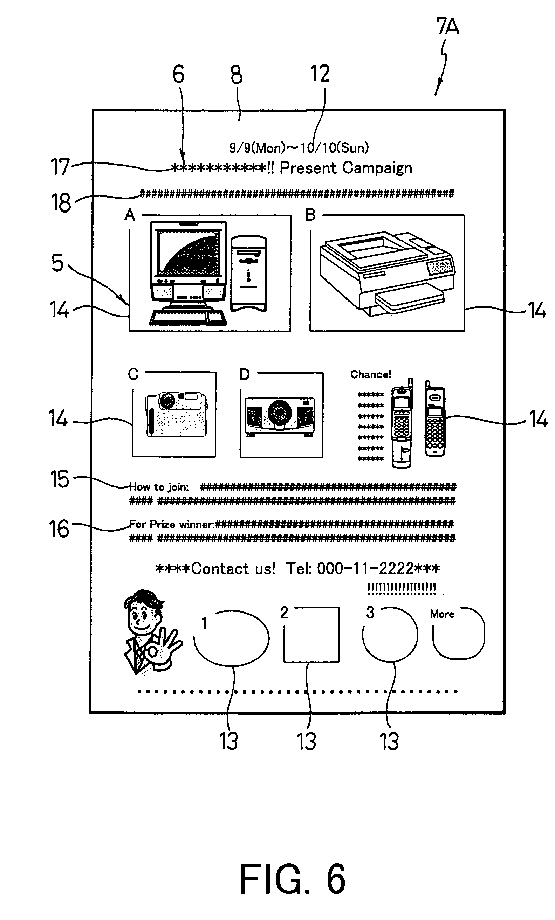

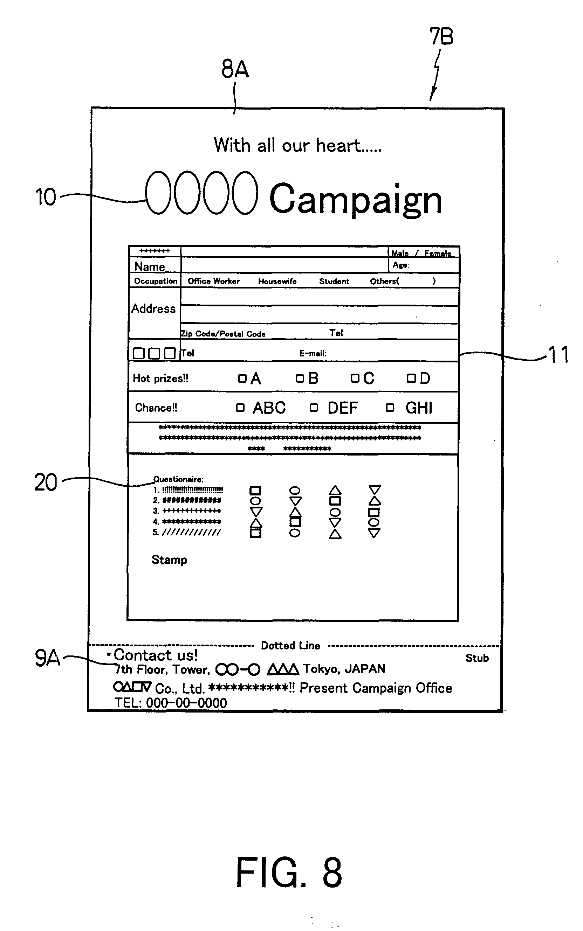

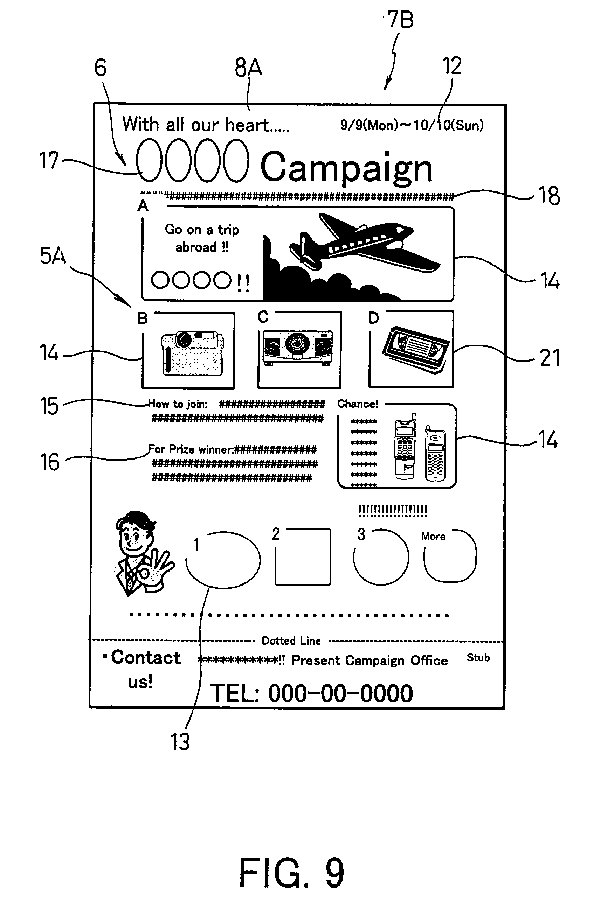

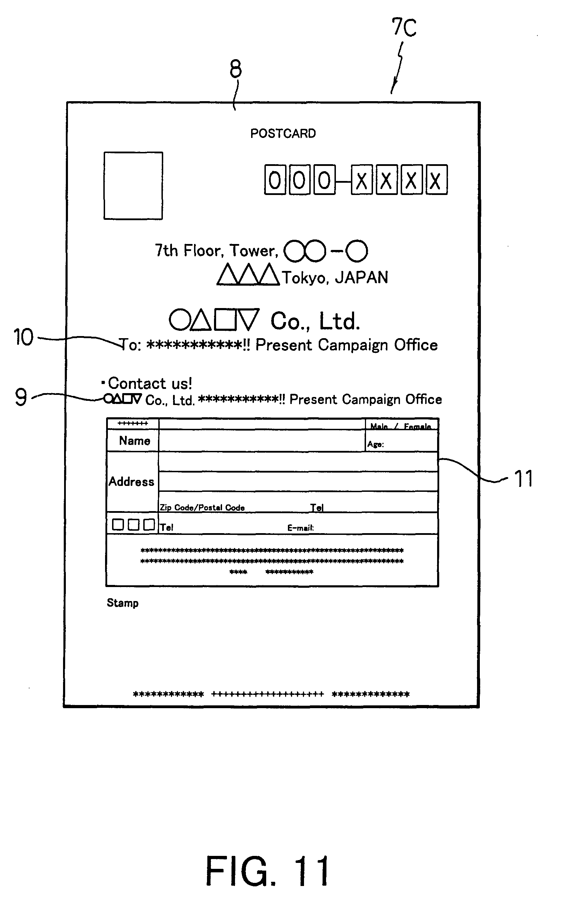

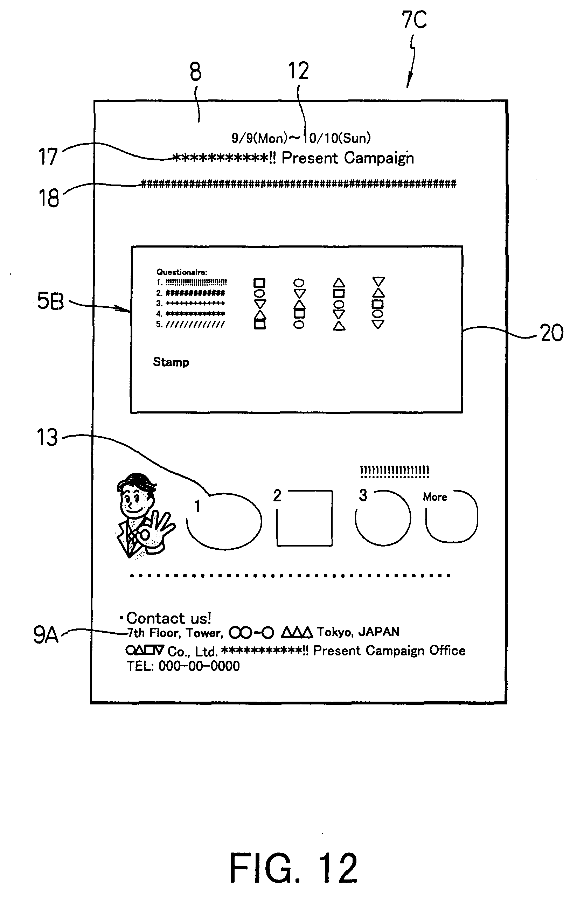

Other embodiments of the present invention will now be described referring to FIGS. 4 to 12. Through the drawings of the embodiments, like components are denoted by like numerals as of the first embodiment and will not be further explained.

A second embodiment of the present invention is shown in FIGS. 4 to 6. It is distinguished from the first embodiment by the fact that the tie-up-campaign card 7 is replaced from another card 7A printed a questionnaire section 20 at one side of the card body 8, and the cards 7A is produced in the card making process 3A. When the campaign is waged, the questionnaire can be enforced during a same time period.

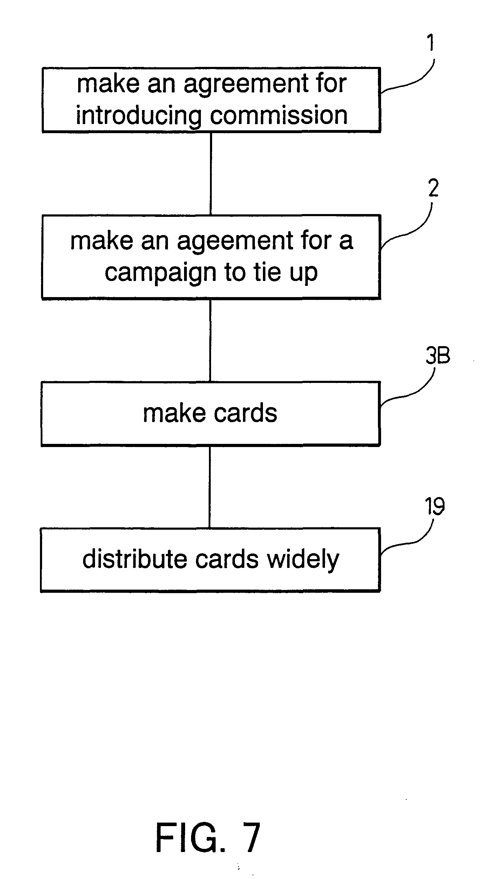

A third embodiment of the present invention is shown in FIGS. 7 to 9. It is distinguished from the second embodiment by the fact that the tie-up-campaign card 7 is replaced from another card 7B. The card 7B is printed a reference 9A for the campaign and a prize advertisement 5A which is printed a prize 21 supplied by the tied-up shop at one side of a card body 8A, and the card 7B is produced in the card making process 3B. In this process, the tied-up shop collects the tie-up-campaign cards 7B.

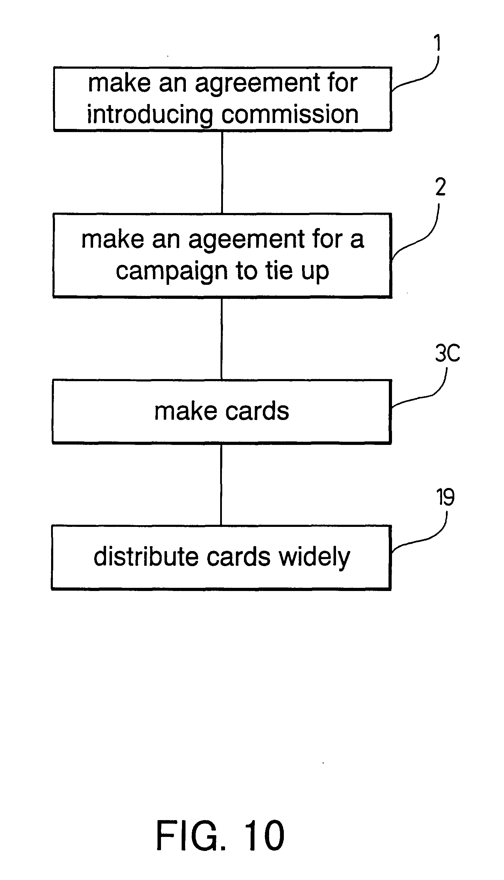

A fourth embodiment of the present invention is shown in FIGS. 10 to 12. It is distinguished from the first embodiment by the fact that tie-up-campaign card 7 is replaced from another card 7C. The card 7C is printed the campaign advertisement 5B without prizes supplied by lottery, etc., and the method having the card 7C which is produced in the process 3C may be conducted.

As set forth above, the advantages of the invention are as follows:
(1) Method for tie-up campaign includes process to make an agreement for introducing commission between a planning agency and companies giving a service which is one of portable telephones, broadcasting, internet providers so as to gain an introducing commission in case that the planning agency introduces members subscribes for the service imposed initial charge; process to make an agreement for a tie-up campaign between the planning agency and tied-up shops including restaurants, *Karaoke* shops, stores which enter free into partnership with the campaign waged by the planning agency according to the agreement of the process to make the agreement for the introducing commission; process to make cards printed advertisement for campaign that the planning agency supplies a gear which is one of portable telephone, tuner and antenna, personal computer free to the members according to the introducing commission agreement and advertisement for the tied-up shops according to the tie-up-campaign agreement; and process to distribute the printed cards for the campaign in such shop which is one of a restaurant, *Karaoke* shop, and a store made the tie-up agreement. Therefore, the shops such as a restaurant, *Karaoke* shop, store and the like tie up the campaign can do the prize campaign without any cost and printed cards.
   Therefore, it can be done in efficiency
(2) As discussed above, the reference for the campaign is a planning agency so that the shops concerned can save trouble, and it can be run the campaign easily.
(3) As discussed above, the planning agency can make a list of applicants, the shops entering into partnership with the campaign can receive it
(4) As discussed above, the claims 2, 3 and 4 will have similar advantages to that according to the above-described efforts.

## Claims

1. A method for tie-up campaign comprising:
process to make an agreement for introducing commission between a planning agency and companies giving a service which is one of portable telephones, broadcasting, internet providers so as to gain an introducing commission in case that the planning agency introduces members subscribes for the service imposed initial charge;
process to make an agreement for a tie-up campaign between the planning agency and tied-up shops induding restaurants, *Karaoke* shops, stores which enter free into partnership with the campaign waged by the planning agency according to the agreement of the process to make the agreement for the introducing commission;
process to make cards printed advertisement for campaign that the planning agency supplies a gear which is one of portable telephone, tuner and antenna, personal computer free to the members according to the introducing commission agreement and advertisement for the tied-up shops according to the tie-up-campaign agreement; and
process to distribute the printed cards for the campaign in such shop which is one of a restaurant, *Karaoke* shop, and a store made the tie-up agreement.

2. The method for tie-up campaign according to claim 1, wherein the card making process produces cards printed a campaign advertisement for prizes by lottery therein.

3. A tie-up-campaign card for comprising:
a card body; and
printed information including;
a planning agency identification section for the insertion of postal information and name of a planning agency,
a campaign advertisement directed to free supplied apparatus which is one of portable telephone, tuner and antenna, a personal computer to the members subscribing for companies dealing with a service which is one of portable telephone, broadcasting or internet provider imposed initial fee,
a member identification section for the insertion of postal information and name of a member, and
a campaign advertisement of the shop which is one of a restaurant, *Karaoke* shop, and a store, the shop running a tie-up campaign free.

4. The tie-up-campaign card according to claim 3, wherein the card body is printed a campaign advertisement for prizes by lottery therein.

5. The tie-up-campaign card according to claim 3, wherein the card body is printed the address and name of a planning agency in one side thereof.
